Europäisches Patentamt

European Patent Office

Office européen des brevets

(11) Veröffentlichungsnummer: **0 467 225 A2**

## EUROPÄISCHE PATENTANMELDUNG

(21) Anmeldenummer: **91111592.1**

(51) Int. Cl.⁵: **G01G 23/37**

(22) Anmeldetag: **12.07.91**

(30) Priorität: **14.07.90 DE 4022512**

(43) Veröffentlichungstag der Anmeldung:
**22.01.92 Patentblatt 92/04**

(84) Benannte Vertragsstaaten:
**CH DE FR GB LI**

(71) Anmelder: **SARTORIUS AG**
**Weender Landstrasse 94-108**
**W-3400 Göttingen(DE)**

(72) Erfinder: **Martens, Jörg-Peter, Dr.**
**Marienburgerstrasse 15 b**
**W-3406 Bovenden(DE)**
Erfinder: **Klauer, Alfred, Dr.**
**Am Kolke 20 b**
**W-3400 Göttingen(DE)**

(74) Vertreter: **Köhler, Rudolf**
**c/o Sartorius GmbH Weender Landstrasse**
**94-108**
**W-3400 Göttingen(DE)**

(54) **Elektrische Waage.**

(57) Für eine elektrische Waage mit einem Meßwertaufnehmer (1...16) zur Erzeugung eines lastabhängigen Meßsignals, mit einer digitalen Signalverarbeitungseinheit (18), mit mindestens einem Speicher (20) zur Abspeicherung von Daten, die aus Meßsignalen der Vergangenheit hergeleitet sind, und mit Schaltungen oder Datenverarbeitungseinrichtungen, die unter Benutzung der abgespeicherten Daten das Meßsignal des Meßwertaufnehmers mit einem Korrekturwert zur Beschleunigung des Übergangsverhaltens nach einer Laständerung korrigieren und dann einer Anzeigeeinheit (19) zuführen, wird vorgeschlagen, daß der Korrekturwert durch einen rekursiven Algorithmus errechnet wird und daß die Rekursionsformel so gestaltet ist, daß der stationäre Endwert des Korrekturwertes für alle Lastwerte verschwindet. Dadurch wird der Speicherbedarf zur Errechnung der Korrekturwerte verringert und eine Beeinflussung des stationären Endwertes durch die Korrektur verhindert.

EP 0 467 225 A2

Die Erfindung bezieht sich auf eine elektrische Waage mit einem Meßwertaufnehmer zur Erzeugung eines lastabhängigen Meßsignals, mit einer digitalen Signalverarbeitungseinheit, mit mindestens einem Speicher zur Abspeicherung von Daten, die aus Meßwerten der Vergangenheit hergeleitet sind, und mit Schaltungen oder Datenverarbeitungseinrichtungen, die unter Benutzung der abgespeicherten Daten das Meßsignal des Meßwertaufnehmers mit einem Korrekturwert zur Beschleunigung des Übergangsverhaltens nach einer Laständerung korrigieren und dann einer Anzeigeeinheit zuführen.

Waagen dieser Art sind zum Beispiel aus der DE-PS 33 40 512 bekannt. Dort ist in Spalte 3, Zeile 22 bis 36 darauf hingewiesen, daß z.B. der Kriechfehler mancher Meßwertaufnehmer durch die Benutzung der Daten aus der Vergangenheit korrigiert werden kann. Das in der DE-PS 33 40 512 angegebene Korrekturverfahren ist aber sehr speicheraufwendig, da bei einer Abklingzeit des Kriechens von zum Beispiel 30 Minuten Meßwerte aus diesen 30 Minuten gespeichert werden müssen und die zugehörigen Gewichtungsfaktoren ebenfalls fest abgespeichert sein müssen.

Eine deutliche Verringerung des Speicherbedarfes ergibt sich bei Benutzung eines rekursiven Rechenalgorithmusses, wie es zum Beispiel in der EP 0 171 237 vorgeschlagen ist. Der dort vorgeschlagene Algorithmus führt die Korrektur jedoch derart durch, daß nach einer Laständerung die Korrektur mit dem bisherigen Wert startet und bis zu einem stationären Endwert anwächst bzw. abfällt (siehe Seite 4, Zeile 35-38 und Gleichung (1) und (2)). Dies hat jedoch zur Folge, daß die Kriechkorrektur in das stationäre Endergebnis eingeht und Fehler bei der Kriechkorrektur das stationäre Endergebnis verfälschen. Wird beispielsweise eine Waage unter Last eingeschaltet, so bewirkt der Algorithmus eine Kriechkorrektur, obwohl das Kriechen des Meßwertaufnehmers längst abgeschlossen ist.

Aufgabe der Erfindung ist es daher, eine Waage der eingangs genannten Art mit Korrekturschaltung bzw. Korrektureinrichtungen anzugeben, deren Speicherbedarf erheblich verringert ist, ohne daß die eben geschilderten Nachteile auftreten.

Erfindungsgemäß wird dies dadurch erreicht, daß der Korrekturwert durch eine rückgekoppelte Schaltung mit Speichern und Rechenbausteinen rekursiv errechnet wird und die Rückkopplung derart ausgelegt ist, daß der stationäre Endwert des Korrekturwertes bei allen Lasten auf der Waage verschwindet. Der Korrekturwert wird daher durch einen rekursiven Algorithmus errechnet, wobei die Rekursionsformel so gestaltet ist, daß der stationäre Endwert der Korrektur für alle Lastwerte verschwindet. Dadurch wird der Speicherbedarf zur Errechnung des Korrekturwertes verringert.

Die Korrektur erfolgt also vor allem sofort nach einer Laständerung und klingt allmählich auf Null ab. Das stationäre Endergebnis wird damit durch die Korrektur nicht beeinflußt.

Vorteilhafte Ausgestaltungen ergeben sich aus den Unteransprüchen.

Die Erfindung wird im folgenden anhand der schematischen Figuren beschrieben. Dabei zeigt:

Fig. 1 einen Schnitt durch den mechanischen Teil der Waage und ein Blockschaltbild der Elektronik,

Fig. 2 eine beispielhafte Kriechkurve und die Größe der Korrektur für die Anzeige und

Fig.3 ein Strukturdiagramm des verwendeten Korrekturalgorithmusses.

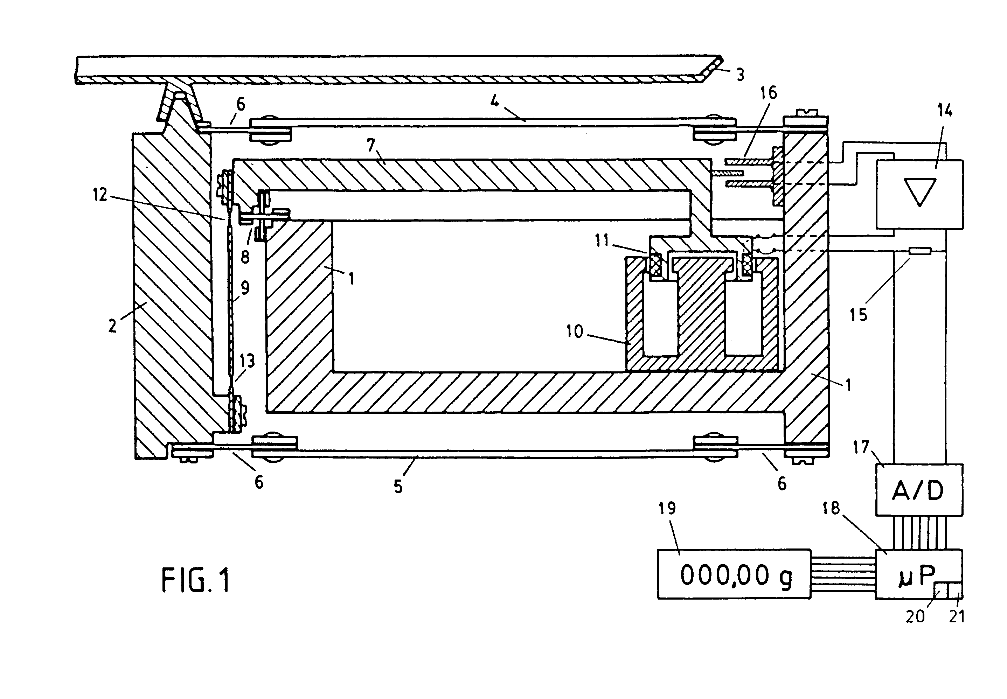

Die elektrische Waage in Fig. 1 besteht aus einem gehäusefesten Stützteil 1, an dem über zwei Lenker 4 und 5 mit den Gelenkstellen 6 ein Lastaufnehmer 2 in senkrechter Richtung beweglich befestigt ist. Der Lastaufnehmer 2 trägt in seinem oberen Teil die Lastschale 3 zur Aufnahme des Wägegutes und überträgt die der Masse des Wägegutes entsprechende Kraft über ein Koppelelement 9 mit den Dünnstellen 12 und 13 auf den kürzeren Hebelarm des Übersetzungshebels 7. Der Übersetzungshebel 7 ist durch ein Kreuzfedergelenk 8 am Stützteil 1 gelagert. Am längeren Hebelarm des Übersetzungshebels 7 greift die Kompensationskraft an, die durch eine stromdurchflossene Spule im Luftspalt eines Permanentmagnetsystems 10 erzeugt wird. Die Größe des Kompensationsstromes wird in bekannter Weise durch den Lagensensor 16 und den Regelverstärker 14 so geregelt, daß Gleichgewicht zwischen dem Gewicht des Wägegutes und der elektromagnetischen Kompensationskraft herrscht. Der Kompensationsstrom erzeugt am Meßwiderstand 15 eine Meßspannung, die einem Analog/Digital-Wandler 17 zugeführt wird. Das digitalisierte Ergebnis wird von einer digitalen Signalverarbeitungseinheit 18 übernommen, weiterverarbeitet und anschließend in der Anzeigeeinheit 19 digital angezeigt.

Die digitale Signalverarbeitungseinheit 18 weist nun ein Korrekturprogramm, einen dazugehörigen RAM-Speicherbereich 20, in dem aus Meßwerten der Vergangenheit hergeleitete Werte abgespeichert sind, und einen dazugehörigen ROM- bzw. PROM- bzw. EEPROM-Speicherbereich 21 auf, in dem die Formeln und Konstanten des Korrekturprogrammes fest abgespeichert sind.

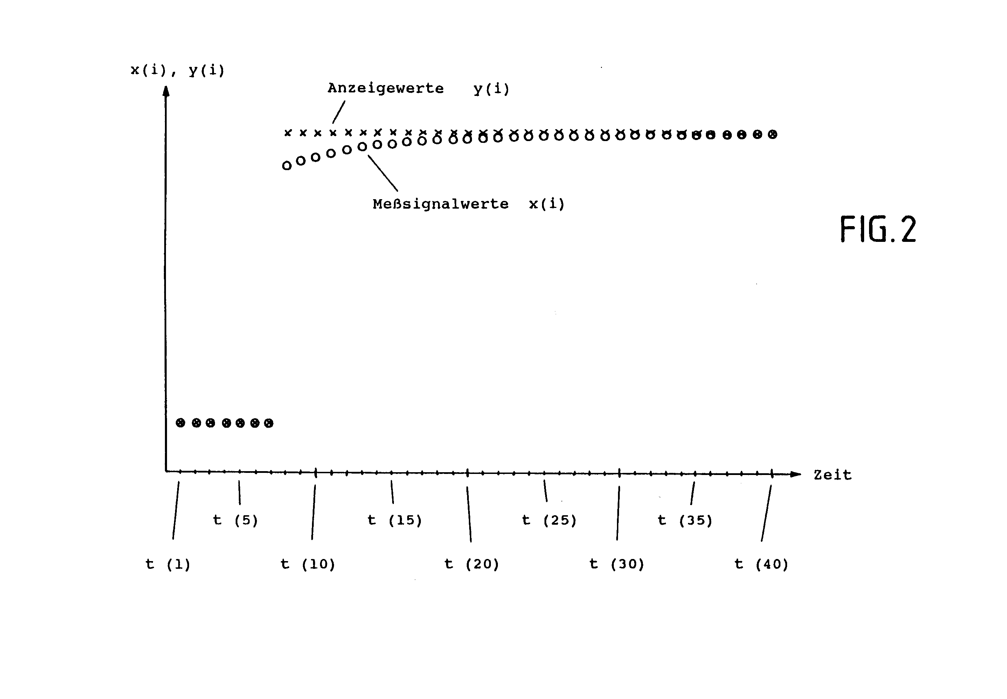

Die Wirkung dieser Korrektur ist schematisch in Fig.2 dargestellt. Dort ist waagerecht die Zeit aufgetragen, wobei zu den äquidistanten Zeitpunkten t(1)...t(40) jeweils Meßsignalwerte x(1)...x(40) vom Meßwertaufnehmer 1...16 über den Analog/Digital-Wandler 17 an die digitale Signalverarbeitungseinheit 18 abgegeben werden. Diese Meßsignalwerte x(i) sind in Fig. 2 durch kleine Kreise dargestellt. Bei einer plötzlichen Laständerung direkt nach dem Zeitpunkt t(7) folgt das Meßsignal mit einem großen Sprung von x(7) auf x(8) und einem anschließenden geringen Einlaufen (Kriechen). Dieses Einlaufen ist in Fig. 2 der Deutlichkeit halber übertrieben groß gezeichnet. Der Korrekturalgorithmus ist nun so ausgelegt, daß der Korrekturwert, der zum Meßsignalwert $x(i)$ hinzuaddiert wird um den Anzeigewert $y(i)$ zu erhalten, unmittelbar nach der Laständerung - also zur Zeit $t(8)$ - am größten ist und zu den folgenden Zeitpunkten $t(i)$ allmählich auf Null abnimmt; und zwar so, daß der resultierende Anzeigewert $y(i)$ nach der Laständerung immer den stationären Endwert $y(oo) = x(oo) \sim y(40) \sim x(40)$ erreicht. Im Beispiel der Korrekturformel

$$y(i) = x(i) + k_1(i)$$

und der Rekursionsformel

$$k_1(i) = [x(i)-x(i-1)]^\bullet e_1 + d_1 {}^\bullet k_1(i-1)$$

gemäß Anspruch 3 muß die Konstante $e_1$ also so gewählt sein, daß die Korrektur $k_1(8)$ den richtigen Bruchteil der Laständerung $x(8)-x(7)$ ausmacht. (Die Korrekturglieder $k_1(1)...k_1(7)$ sind Null, da die Waage vorher längere Zeit unter der gleichen Last gestanden hat). Bei dem in Fig. 2 übertrieben gezeichneten Einlaufen müßte $e_1$ zu etwa 0,1 gewählt sein, in Wirklichkeit liegt der Wert unter $10^{-3}$. Bei der Berechnung des Korrekturgliedes $k_1(9)$ ist dann der Anteil des Summanden $[x(9)-x(8)]^\bullet e_1$ klein, da sich $x(9)$ und $x(8)$ kaum unterscheiden, der Hauptanteil kommt dann aus dem Summanden $d_1{}^\bullet k_1(8)$. Dasselbe gilt für die folgenden Korrekturglieder. Die Konstante $d_1$, die $< 1$ ist, bestimmt also das zeitliche Abklingen der Größe der Korrektur und die Konstante $d_1$ muß so gewählt sein, daß das Abklingen der Korrektur mit dem Abklingen des Einlaufens des Meßsignals $x(i)$ übereinstimmt. Nach Abschluß des Einlaufens des Meßwertaufnehmers und Erreichen des stationären Endwertes ist also auch das Korrekturglied $k_1(i)$ für große $i$ auf Null zurückgegangen.

Das Korrekturglied $k_1(i-1)$ und der vorletzte Meßsignalwert $x(i-1)$ sind in der digitalen Signalverarbeitungseinheit (18) im RAM-Speicherbereich 20 gespeichert und werden fortlaufend durch die aktuellen Werte ersetzt. Die Konstanten $e_1$ und $d_1$ sind demgegenüber für die jeweilige Waage fest vorgegeben und sind genauso wie die Korrekturformel und die Rekursionsformel in einem ROM- bzw. PROM- bzw. EEPROM-Speicher 21 abgespeichert.

Die eben beschriebene Korrekturformel und Rekursionsformel gemäß Anspruch 3 korrigiert ein sogenanntes "lineares Nullpunktseinlaufen": Die Größe der Korrektur ist lastunabhängig und hängt linear von der Laständerung - $x(8)-x(7)$ im Beispiel von Fig. 2 - ab. Dieses lineare Nullpunktseinlaufen ist zum Beispiel typisch für Waagen mit Dehnungsmeßstreifen; bei Waagen mit elektromagnetischer Kraftkompensation wie in Fig. 1 kann es zum Beispiel durch Kriechen der Lenkergelenkstellen 6 hervorgerufen werden.

Die Korrekturformel und Rekursionsformel gemäß Anspruch 4 korrigiert ein sogenanntes "lineares Empfindlichkeitseinlaufen": Die Größe der Korrektur ist lastproportional - Faktor $x(i)$ vor $k_2(i)$ - und hängt linear von der Laständerung ab. Dieses lineare Empfindlichkeitseinlaufen kann zum Beispiel durch Ummagnetisierungseffekte im Permanentmagnetsystem 10 verursacht sein. Da die Stärke des Magnetfeldes nur in die Empfindlichkeit eingeht, ist der Einfluß bei geringer Last gering und bei hoher Last groß.

Die Korrekturformel und Rekursionsformel gemäß Anspruch 5 korrigiert ein sogenanntes "quadratisches Nullpunktseinlaufen": Die Größe der Korrektur ist lastunabhängig - kein lastabhängiger Vorfaktor vor $k_3$ - und hängt quadratisch von der Laständerung ab: Der Vorfaktor vor $e_3$ ist

$$[x(i)-x(i-1)]^\bullet[x(i)+x(i-1)] = [x(i)]^2 - [x(i-1)]2.$$

Die quadratische Abhängigkeit wird von der in der Spule 11 erzeugten Stromwärme verursacht, die ja proportional zum Quadrat des Stromes ansteigt. Wirkt diese Stromwärme zum Beispiel allmählich auf die Gelenkstellen 6 ein, so ergibt sich ein quadratisches Nullpunktseinlaufen.

Die Korrekturformel und Rekursionsformel gemäß Anspruch 6 korrigiert ein sogenanntes "quadratisches Empfindlichkeitseinlaufen": Die Größe der Korrektur ist lastproportional - Faktor $x(i)$ vor $k_4(i)$ - und hängt quadratisch von der Laständerung in der Belastung ab. Dieses quadratische Empfindlichkeitseinlaufen tritt zum Beispiel durch den Einfluß der Stromwärme in der Spule 11 auf die magnetische Feldstärke des Permanentmagnetsystems 10 auf.

Die Korrekturformel und Rekursionsformel gemäß Anspruch 7 korrigiert ein quadratisches Nullpunktseinlaufen bei versetztem elektrischen Nullpunkt. Die Rekursionsformel gemäß Anspruch 7 unterscheidet sich von der Rekursionsformel gemäß Anspruch 5 durch die zusätzliche Konstante $c_5$ im Vorfaktor von $e_5$. Der Vorfaktor von $e_5$:

$$[x(i)-x(i-1)] \cdot [x(i) + x(i-1)-2c_5]$$

kann durch eine Umformung in die Form

$$[x(i)-c_5]^2-[x(i-1)-c_5]^2$$

gebracht werden. Die Konstante $c_5$ bewirkt also eine Nullpunktsverschiebung bei den einzelnen $x(i)$. Dies ist zum Beispiel notwendig, wenn der Übersetzungshebel 7 und die Spule 11 unter Berücksichtigung des Übersetzungsverhältnisses schwerer sind als der Lastaufnehmer 2 und die Waagschale 3. Dann tritt mechanisches Gleichgewicht - und damit der Strom Null in der Spule 11 - erst bei einer gewissen Last - nämlich $x(i) = c_5$ - auf der Waagschale 3 auf; und die Verlustleistung in der Spule 11 hängt quadratisch vom Unterschied zu diesem Wert ab.

Die Korrekturformel und Rekursionsformel gemäß Anspruch 8 korrigiert ein quadratisches Empfindlichkeitseinlaufen bei versetztem elektrischen Nullpunkt. Die Ausführungen im letzten Absatz gelten sinngemäß, nur daß es sich um Empfindlichkeitseinlaufen handelt und daher vor $k_6(i)$ noch der Vorfaktor $x(i)-c_6$ steht.

Die Korrekturformel und Rekursionsformel gemäß Anspruch 9 korrigiert ein lineares Empfindlichkeitseinlaufen bei versetztem elektrischen Nullpunkt. Die obigen Ausführungen über lineares Empfindlichkeitseinlaufen gelten sinngemäß, nur daß zusätzlich die Verschiebung durch die Konstante $c_7$ erfolgt.

In der in Anspruch 2 angegebenen allgemeinen Korrekturformel und allgemeinen Rekursionsformel ist die Summation all dieser Einflüsse und eventueller weiterer vorgesehen. Die Konstanten $a_n$ bestimmen die Korrektur des Nullpunktseinlaufens, die Konstanten $b_n$ bestimmen die Korrektur des Empfindlichkeitseinlaufens, die Konstante c bestimmt die Verschiebung des elektrischen Nullpunktes, die Konstanten $d_n$ bestimmen die Abklingzeitkonstanten und die Funktionen $f_n$ bestimmen die Abhängigkeit der Größe der Korrektur von der Belastungsänderung. Da die vorgegebenen Funktionen $f_n[x(i),x(i-1)]$ unter $10^{-3}$ liegen und die Konstanten $d_n < 1$ sind, geht die Korrektur nach einem Lastwechsel immer auf Null zurück.

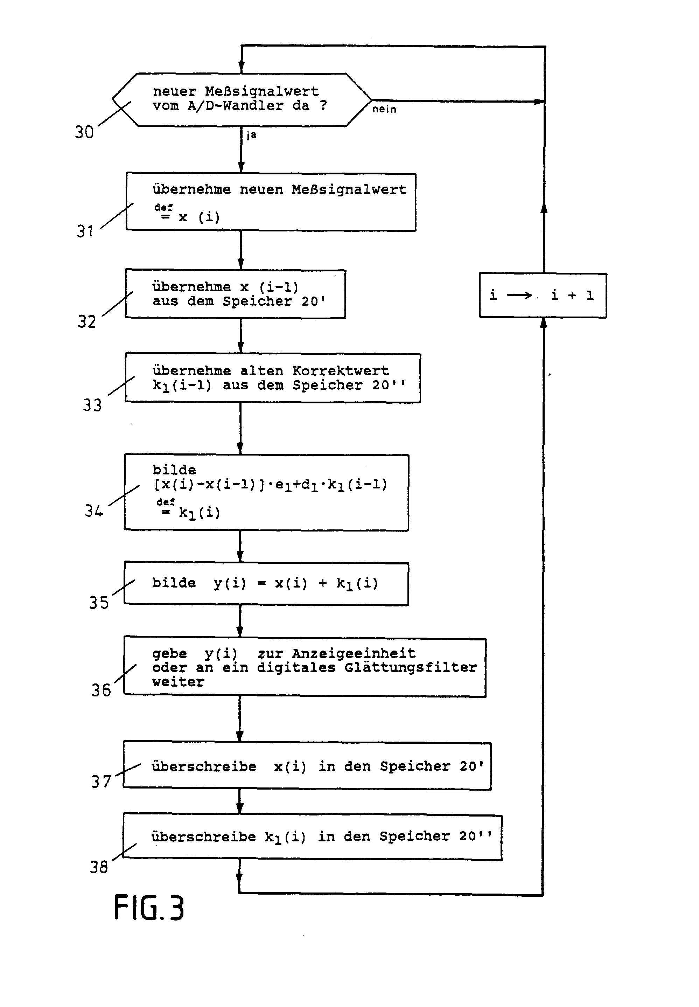

Der Ablauf des Datenverarbeitungsprogrammes ist beispielhaft in Fig. 3 dargestellt, wobei die Benutzung der Korrekturformel und der Rekursionsformel aus Anspruch 3 zugrunde gelegt ist. Innerhalb einer Warteschleife wartet der Mikroprozessor auf einen neuen Meßsignalwert vom Analog/ Digital-Wandler 17 in Fig. 1 (Abfrage 30). Sendet der Analog/Digital-Wandler 17 einen neuen Meßsignalwert, so wird dieser übernommen und als $x(i)$ definiert (Kasten 31). Dann wird bei 32 der vorhergehende Meßsignalwert $x(i-1)$ aus dem RAM-Speicher 20' übernommen und ebenso bei 33 der alte Korrekturwert $k_1(i-1)$ aus dem RAM-Speicher 20''. Aus den drei übernommenen Werten $x(i)$, $x(i-1)$ und $k_1(i-1)$ sowie aus den fest abgespeicherten Konstanten $e_1$ und $d_1$ wird dann bei 34 gemäß der vorgegebenen Rekursionsformel der neue Korrekturwert $k_1(i)$ berechnet und in 35 gemäß der vorgegebenen Korrekturformel der korrigierte Wert $y(i)$ berechnet. Dieser korrigierte Wert wird anschließend bei 36 entweder direkt zur Anzeigeeinheit 19 weitergegeben oder weiteren datenverarbeitenden Programmen als Eingangsgröße zugeführt. Dies kann z.B. ein Mittelwertbildner als Glättungsfilter sein oder ein Multiplizierglied zur Umrechnung in andere Einheiten oder andere allgemein bekannte datenverarbeitende Programme. Anschließend wird bei 37 der neue Wert für $x(i)$ in den Speicher 20' eingeschrieben und dabei der alte Wert $x(i-1)$ gelöscht und in gleicher Weise bei 38 der neue Wert $k_1(i)$ in den Speicher 20'' überschrieben. Anschließend kehrt das Programm in die Warteschleife 30 zurück.

Der RAM-Speicherbereich 20 in Fig. 1 muß also nur so viele Speicherplätze umfassen, daß jeweils der Wert $x(i-1)$ im Speicherplatz 20' und der Wert $k_1(i-1)$ im Speicherplatz 20'' abgespeichert werden kann, zusätzlich zu den für die Rechnung benötigten RAM-Zwischenspeicherplätzen. Im Festwertspeicher 21 müssen neben dem Ablaufprogramm nur die Kostanten $e_1$ und $d_1$ sowie die Rekursionsformel gemäß 34 und die Korrekturformel gemäß 35 fest abgespeichert sein.

**Patentansprüche**

1. Elektrische Waage mit einem Meßwertaufnehmer (1...16) zur Erzeugung eines lastabhängigen Meßsignals, mit einer digitalen Signalverarbeitungseinheit (18), die Speicher (20) zur Abspeicherung von aus vergangenen Meßwerten abgeleiteten Daten und Schaltungen oder Recheneinheiten besitzt, die unter Benutzung der abgespeicherten Daten das Meßsignal des Meßwertaufnehmers mit einem additiven Korrekturwert korrigiert und einer Anzeigeeinheit (19) zuführt, damit nach einer Laständerung schneller der tatsächliche Meßwert angezeigt werden kann, dadurch gekennzeichnet, daß der Korrekturwert durch eine rückgekoppelte Schaltung mit Speichern (20,21) und Rechenbausteinen rekursiv errechnet wird und die Rückkoppelung derart ausgelegt ist, daß der stationäre Endwert des Korrekturwertes für alle Lasten auf der Waage verschwindet.

2. Elektrische Waage nach Anspruch 1, dadurch gekennzeichnet, daß der von der digitalen Signalverarbeitungseinheit korrigierte Anzeigewert $\overline{y(i)}$ zur $\overline{\text{Zeit i}}$ aus dem $\overline{\text{Meßsignal}}$ x(i) des Meßwertaufnehmers zur Zeit i mittels der Formel

$$y(i) = x(i) + \sum_n \{a_n + b_n \cdot [x(i) - c]\} \cdot k_n(i)$$

berechnet wird und daß $k_n(i)$ nach der Rekursionsformel

$$k_n(i) = [x(i) - X(i-1)] \cdot f_n[x(i),x(i-1)] + d_n \cdot k_n(i-1)$$

berechnet wird, wobei $a_n$, $b_n$, c und $d_n$ Konstanten sind, $d_n < 1$ gilt und $f_n$ eine beliebige Funktion darstellt.

3. Elektrische Waage nach Anspruch 2, dadurch gekennzeichnet, daß der von der digitalen Signalverarbeitungseinheit korrigierte Anzeigewert $\overline{y(i)}$ aus dem $\overline{\text{Meßsignal}}$ x(i) mittels der Formel

$$y(i) = x(i) + k_1(i)$$

berechnet wird und daß $k_1(i)$ nach der Rekursionsformel

$$k_1(i) = [x(i) - x(i-1)] \cdot e_1 + d_1 \cdot k_1(i-1),$$

berechnet wird, wobei $e_1$ und $d_1$ Konstanten sind und $d_1 < 1$ gilt.

4. Elektrische Waage nach Anspruch 2, dadurch gekennzeichnet, daß der von der digitalen Signalverarbeitungseinheit korrigierte Anzeigewert $\overline{y(i)}$ aus dem $\overline{\text{Meßsignal}}$ x(i) mittels der Formel

$$y(i) = x(i) + x(i) \cdot k_2(i)$$

berechnet wird und daß $k_1(i)$ nach der Rekursionsformel

$$k_2(i) = [x(i) - x(i-1)] \cdot e_2 + d_2 \cdot k_2(i-1)$$

berechnnet wird, wobei $e_2$ und und $d_2$ Konstanten sind und $d_2 < 1$ gilt.

5. Elektrische Waage nach Anspruch 2, dadurch gekennzeichnet, daß der von der digitalen Signalverarbeitungseinheit korrigierte Anzeigewert $\overline{y(i)}$ aus dem $\overline{\text{Meßsignal}}$ x(i) mittels der Formel

$$y(i) = x(i) + k_3(i)$$

berechnet wird und daß $k_3(i)$ nach der Rekursionsformel

$$k_3(i) = [x(i)-x(i-1)] \cdot [x(i)+x(i-1)] \cdot e_3 + d_3 \cdot k_3(i-1)$$

berechnet wird, wobei $e_3$ und $d_3$ Konstanten sind und $d_3 < 1$ gilt.

6. Elektrische Waage nach Anspruch 2, dadurch gekennzeichnet, daß der von der digitalen Signalverarbeitungseinheit korrigierte Anzeigewert $\overline{y(i)}$ aus dem $\overline{\text{Meßsignal}}$ x(i) mittels der Formel

$$y(i) = x(i) + x(i) \cdot k_4(i)$$

berechnet wird und daß $k_4(i)$ nach der Rekursionsformel

$$k_4(i) = [x(i)-x(i-1)] \cdot [x(i)+x(i-1)] \cdot e_4 + d_4 \cdot k_4(i-1)$$

berechnet wird, wobei $e_4$ und $d_4$ Konstanten sind und $d_4 < 1$ gilt.

7. Elektrische Waage nach Anspruch 2, dadurch gekennzeichnet, daß der von der digitalen Signalverarbeitungseinheit korrigierte Anzeigewert $y(i)$ aus dem Meßsignal $x(i)$ mittels der Formel

$$y(i) = x(i) + k_5(i)$$

berechnet wird und daß $k_5(i)$ nach der Rekursionsformel

$$k_5(i) = [x(i)-x(i-1)]^\bullet[x(i)+x(i-1)-2c_5]^\bullet e_5 + d_5{}^\bullet k_5(i-1)$$

berechnet wird, wobei $c_5, e_5$ und $d_5$ Konstanten sind und $d_5 < 1$ gilt.

8. Elektrische Waage nach Anspruch 2, dadurch gekennzeichnet, daß der von der digitalen Signalverarbeitungseinheit korrigierte Anzeigewert $y(i)$ aus dem Meßsignal $x(i)$ mittels der Formel

$$y(i) = x(i) + [x(i)-c_6]^\bullet k_6(i)$$

berechnet wird und daß $k_6(i)$ nach der Rekursionsformel

$$k_6(i) = [x(i)-x(i-1)]^\bullet[x(i)+x(i-1)-2c_6]^\bullet e_6 + d_6{}^\bullet k_6(i-1)$$

berechnet wird, wobei $c_6, e_6$ und $d_6$ Konstanten sind und $d_6 < 1$ gilt.

9. Elektrische Waage nach Anspruch 2, dadurch gekennzeichnet, daß der von der digitalen Signalverarbeitungseinheit korrigierte Anzeigewert $y(i)$ aus dem Meßsignal $x(i)$ mittels der Formel

$$y(i) = x(i) + [x(i)-c_7]^\bullet k_7(i)$$

berechnet wird und daß $k_7(i)$ nach der Rekursionsformel

$$k_7(i) = [x(i)-x(i-1)]^\bullet e_7 + d_7{}^\bullet k_7(i-1)$$

berechnet wird, wobei $c_7, e_7$ und $d_7$ Konstanten sind und $d_7 < 1$ gilt.

10. Elektrische Waage nach einem der Ansprüche 1 bis 9, dadurch gekennzeichnet, daß der rekursiven Korrektur ein digitales Glättungsfilter nachgeschaltet ist.

FIG.1

FIG.2

```
     ⟨ neuer Meßsignalwert      ⟩  nein
 30  ⟨ vom A/D-Wandler da ?     ⟩ ─────────────┐
                │ ja                            │
                ▼                               │
     ┌──────────────────────────────┐          │
     │ übernehme neuen Meßsignalwert │          │
 31  │  def                         │          │
     │   = x (i)                    │          │
     └──────────────────────────────┘          │
                │                               │
                ▼                       ┌───────────────┐
     ┌──────────────────────┐          │  i ──→  i + 1  │
     │ übernehme x (i-1)     │          └───────────────┘
 32  │ aus dem Speicher 20'  │                  ▲
     └──────────────────────┘                   │
                │                               │
                ▼                               │
     ┌──────────────────────────────┐          │
     │ übernehme alten Korrektwert   │          │
 33  │ k₁(i-1) aus dem Speicher 20'' │          │
     └──────────────────────────────┘          │
                │                               │
                ▼                               │
     ┌──────────────────────────────────┐      │
     │ bilde                            │      │
     │ [x(i)-x(i-1)]·e₁+d₁·k₁(i-1)      │      │
 34  │  def                            │      │
     │   = k₁(i)                       │      │
     └──────────────────────────────────┘      │
                │                               │
                ▼                               │
     ┌──────────────────────────────┐          │
 35  │ bilde  y(i) = x(i) + k₁(i)    │          │
     └──────────────────────────────┘          │
                │                               │
                ▼                               │
     ┌──────────────────────────────────┐      │
     │ gebe  y(i)  zur Anzeigeeinheit    │      │
     │ oder an ein digitales Glättungsf. │      │
 36  │ weiter                           │      │
     └──────────────────────────────────┘      │
                │                               │
                ▼                               │
     ┌──────────────────────────────────┐      │
 37  │ überschreibe  x(i) in den Speicher 20' │ │
     └──────────────────────────────────┘      │
                │                               │
                ▼                               │
     ┌──────────────────────────────────┐      │
 38  │ überschreibe k₁(i) in den Speicher 20'' │ │
     └──────────────────────────────────┘      │
                │                               │
                └───────────────────────────────┘
```

Block 31:
$$\overset{\text{def}}{=} x\,(i)$$

Block 32: übernehme $x\,(i-1)$ aus dem Speicher 20'

Block 33: übernehme alten Korrektwert $k_1(i-1)$ aus dem Speicher 20''

Block 34: bilde
$$[x(i)-x(i-1)]\cdot e_1 + d_1 \cdot k_1(i-1) \overset{\text{def}}{=} k_1(i)$$

Block 35: bilde $y(i) = x(i) + k_1(i)$

Block 37: überschreibe $x(i)$ in den Speicher 20'

Block 38: überschreibe $k_1(i)$ in den Speicher 20''

$i \longrightarrow i + 1$

# FIG.3